# EUROPEAN PATENT SPECIFICATION

(11) **EP 4 195 957 B1**
(45) Date of publication and mention of the grant of the patent: **29.04.2026**
(21) Application number: 21762683.7
(22) Date of filing: 15.08.2021
(51) Int. Cl.: A24C 5/01, A24D 1/20, A24F 40/46

(54) **AEROSOL GENERATING ARTICLE**
AEROSOLERZEUGUNGSARTIKEL
ARTICLE DE GÉNÉRATION D'AÉROSOL

(30) Priority: 17.08.2020 EP 20191410
(43) Date of publication of application: 21.06.2023
(73) Proprietor: JT International SA, 1202 Geneva (CH)
(72) Inventor: BOUCHUIGUIR, Layth Sliman, 1293 Bellevue (CH)
(74) Representative: Gill Jennings & Every LLP
(86) International application number: PCT/EP2021/072659
(87) International publication number: WO 2022/038063

(56) References cited:
- EP-A1- 2 921 065
- CN-A- 108 777 893
- CN-A- 110 279 151

## Description

The present invention relates to aerosol generating articles, and more specifically to aerosol generating articles having non-ignitable insulation.

Devices which heat rather than burn an aerosol generating article to produce vapour for inhalation have become popular with consumers in recent years. Many different approaches have been developed to provide heat to the aerosol generating article in such devices, for example by radiative or conductive heating. Such 'heat-not-burn' methods contrast to traditional cigarettes which are lit at one end and inhaled by drawing on an opposite end. In general, aerosol generating articles that are designed for use with heat-not-burn devices should not be consumed as traditional cigarettes. It is important to discourage the user from consuming heat-not-burn aerosol generating articles in the traditional way - i.e. by lighting the tobacco rod. EP 2921065 A discloses an aerosol generating article comprising an aerosol-forming substrate, a filter, a wrap around the aerosol-forming substrate and a ceramic tube disposed adjacent to the aerosol -forming substrate at the upstream end of the article.

However, it is also important to ensure that the consumer experience is not hindered and it is desirable to provide improved methods of heating aerosol generating articles.

The present invention therefore aims to provide an aerosol generating article which encourages safe consumption but which provides an improved vapour profile and aerosol delivery.

### SUMMARY OF THE INVENTION

According to a first aspect there is provided an aerosol generating article comprising: a rod of aerosol generating material having a first end and a second end opposite to the first end; a filter attached at the first end of the rod; a paper wrap wound around the rod so as to provide an outer layer; and a non-ignitable insulation provided at the second end of the rod, wherein the insulation is arranged to prevent ignition of the aerosol generating material at the second end, and wherein the insulation allows transmission of microwave radiation such that the aerosol generating material at the second end can be heated by an external source of microwave radiation; wherein the non-ignitable insulation is a sheet of ceramic material, arranged within the article so as to encircle a portion of the aerosol generating material at the second end of the rod.

By using an insulation which is non-ignitable but which is also permeable to microwave radiation, it is possible to provide an aerosol generating article which can be heated by microwave heating, and which prevents the user from combusting the aerosol generating material as a traditional cigarette. In other words, an aerosol generating article is provided which can be heated using microwave heating but which adheres to regulations requiring a heat-not-burn consumable to be not combustible.

By an insulation which 'allows transmission of microwave radiation', we intend to mean that the material must be suitable for use when the aerosol generating article is heated with microwave radiation. For example, the material does not cause dielectric breakdown of air when exposed to microwave radiation. The material should also be safe at the required temperature for heat-not-burn operation, typically around 200 to 350 degrees Celsius, so as to not release toxic elements that could be harmful to the end user. It is important that the insulation material has these characteristics whilst at the same time being suitable for preventing ignition. The role of the insulation is to prevent the aerosol generating article from being ignited and smoked like a conventional cigarette, whilst allowing the article to be heated by microwave radiation and consumed as a heat-not-burn aerosol product.

It has been found that one particularly suitable material for use as the non-ignitable material may be ceramic. One advantage of having the non-ignitable material comprise ceramic is that ceramic has strong heat insulation properties whilst being susceptible to microwave heating. As such, a ceramic insulation provides good protection against ignition by an open flame, whilst allowing (or improving) microwave heating of the aerosol generating article. Furthermore, ceramic material is known to have less of a negative impact on the environment when disposed. The non-ignitable insulation may be wholly made from ceramic, or may comprise a composite material comprising ceramic as one component.

The non-ignitable insulation may be implemented within the aerosol generating article in one, or a combination of, a number of different forms. In one simple example, the insulation may consist of one or more blocks of insulating material placed along the length of the article. In another example, the insulation may consist of one or more rings of insulating material positioned along the length of the article. In another example, the insulation may consist of one or more cylinders, hollow or filled, which are placed along the length of the article.

According to the present invention, the insulating material comprises a sheet of insulating material, arranged within the article so as to encircle a portion of the aerosol generating material at the second end of the rod. An advantage is that a sheet of insulating material can be easier to integrate into the manufacturing process of an aerosol generating article. For example, a sheet of insulating material can be shaped and positioned so as to overlay a portion of a paper wrap, and once the aerosol generating material (and filter, if applied) are in position, the paper wrap and sheet of insulating material can be rolled together in one motion to form a rod shaped aerosol generating article. The non-ignitable insulation is a sheet of ceramic material, and the sheet is arranged within the article so as to encircle a portion of the aerosol generating material at the second end of the rod.

Another advantage of a sheet-like insulation material is that it is easier (or made possible, in some examples) to achieve a desired thickness of the insulation. The insulation material can be battered or stamped for example to produce a sheet having a desired uniform thickness and then the sheet can be applied in either one or multiple ply to the aerosol generating article to provide the desired amount of insulation. Typically, the sheet of insulating material may have a thickness of between about 0.1 mm to about 1 mm, preferably between about 0.1 mm to 0.5 mm.

Whilst as discussed above the non-ignitable insulation may comprise any suitable material, the aspects below will be discussed in relation to a non-ignitable insulation having ceramic material. It will be appreciated that many of the features discussed below can be equally applied when the material is not exclusively or in any part ceramic. The sheet of ceramic material may be wound around the rod so as to encircle the portion of the aerosol generating material at the second end. The paper wrap may be wound around the sheet of ceramic material such that the paper wrap encircles both the aerosol generating material and the insulation at the second end of the rod.

As noted above, the insulation may be provided within the aerosol generating article as a hollow or filled cylinder. The cylinder may be comprised of a sheet rolled up and affixed as a cylinder, or it may be manufactured specifically as a cylinder. The non-ignitable insulation may comprise one or more hollow ceramic cylinders, and each cylinder may surround a portion of aerosol generating material at the second end of the rod, preferably wherein each of the one or more hollow ceramic cylinders has a radial thickness of between about 0.1 mm to 0.5 mm.

The insulation may typically be shaped and sized so as to cause minimum disturbance to the consumption of the aerosol generating article whilst still providing the functionality of preventing ignition. Typically, the insulation may extend a distance of between about 0.5 cm to about 1.0 cm along the length of the rod.

An 'aerosol generating material' should be understood as a component suitable for being heated such that an aerosol may be generated, particularly when heated by microwave radiation. The aerosol generating material may comprise tobacco. The paper wrap may typically comprise cigarette paper.

According to a second aspect there is provided an aerosol generating system, comprising: an aerosol generating device having a heating chamber and a heater arranged to provide heat to the heating chamber, an aerosol generating article according to the first aspect having any one or more of the above features, engaged with the device such that at least a portion of the second end of the rod is inserted within the heating chamber, wherein the heater comprises a source of microwave radiation and is arranged to selectively provide microwave radiation to the article so as to heat the aerosol generating material in the article. The heater may be arranged to provide microwave radiation to the full length of the rod of aerosol generating material.

According to a third aspect there is provided a method of providing an aerosol generating article, comprising the steps of: providing a rod of aerosol generating material; attaching a filter at a first end of the rod; providing a non-ignitable insulation at a second end of the rod; wrapping the rod, insulation and/or the filter with a paper wrap so as to form an outer layer, wherein the insulation is arranged to prevent ignition of the aerosol generating material at the second end, and wherein the insulation allows transmission of microwave radiation such that the aerosol generating material at the second end can be heated by an external source of microwave radiation.

The step of providing a non-ignitable insulation at a second end of the rod comprises: wrapping a portion of aerosol generating material at the second end of the rod with a ceramic sheet.

### BRIEF DESCRIPTION OF THE DRAWINGS

An example aerosol generating article will now be described by way of example with reference to the accompanying drawings, in which:
Figure 1 schematically illustrates an example aerosol generating device in an assembled configuration.
Figure 2 schematically illustrates the steps performed in an example aerosol generating article manufacture method.

### DETAILED DESCRIPTION

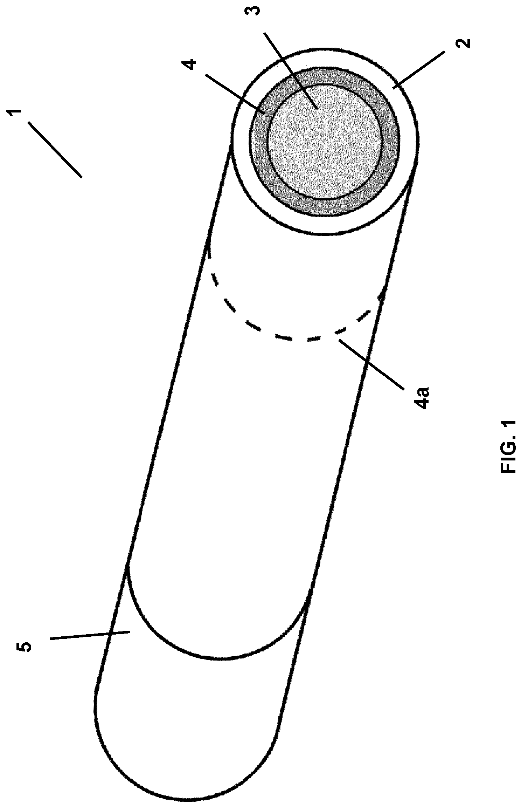

An aerosol generating article 1 having a non-ignitable insulation 4 is generally illustrated in an assembled configuration in Figure 1.

The aerosol generating article 1 comprises a rod of aerosol generating material 3 and a filter 5 attached at an end (the 'filter end') of the rod. A paper wrap 2 encircles and contains the aerosol generating material 3 and also partially or wholly the filter 5. Here, the aerosol generating article 1 is a 'smoking article', which is similar to a conventional cigarette, but which is intended for consumption using a heat-not-burn device. The rod of aerosol generating material 3 is therefore a rod comprising tobacco. In other examples, the aerosol generating article 1 can be a vapour generating device, such as an electronic cigarette, or alternatively the article can be a smoking article which employs other means than heat-not-burn techniques.

The aerosol generating article 1 further comprises a layer of non-ignitable insulation 4. According to the invention, the insulation 4 is a thin sheet consisting of non-flammable/ignitable ceramic material. The ceramic sheet layer is placed between the paper wrap 2 and the aerosol generating material 3, such that the sheet of insulation 4 encircles the aerosol generating material 3 at the position at which is it located. In this example the ceramic sheet is positioned at an end opposing the filter end, and extends along a length of the rod. In Figure 1, dotted line 4a indicates the length which the ceramic sheet extends. In this example the distance between the distal end (i.e. end opposite the filter end) and the line 4a is about 0.5 cm. In other examples the dotted line 4a could be positioned at any point along the length of the article, for example it could be coincident with the joint between the rod of aerosol generating material 3 and filter 5 such that the insulation extends substantially along the full length of the rod. In other examples the insulation 4 can be positioned away from the distal end such that a portion of the rod is 'exposed' at the distal end. The size and position of the insulation layer 4 can be adjusted to provide differing effects. In other examples, the insulation 4 may be the outermost layer - i.e. the insulation 4 may encircle and surround both the aerosol generating material 3 and the paper wrap 2.

In use, at least a portion of the article 1 is heated by the application of heat from a heater, to volatilise an amount of aerosol generating material 3 thereby generating an aerosol. In some examples, an end of the rod 3 is heated in order to cause the aerosol generating material at the end to volatilise. Typically, a specified length of the rod is heated by heaters which are positioned proximal to that length. Typically, the article 1 is inserted into a heating chamber of an aerosol generating device.

More specifically, the article 1 is typically heated using a microwave heater. In use, the article 1 is radiated with microwave radiation. The ceramic insulation 4 allows the microwave radiation to pass and heat the aerosol generating material 3 encircled within. The aerosol generating material 3 is then heated to release an aerosol comprising the desired substance, which the user can inhale by drawing on the filter 5 at the filter end 5.

Whilst the aerosol generating material 3 will typically produce a gas or a solid and/or liquid suspension in gas when heated, it will be appreciated that the terms 'vapour' and 'aerosol' are generally used interchangeably here, and refer generally to the substance which is produced when the aerosol generating material 3 is heated.

Typically, the article 1 is inserted into a heating chamber of an aerosol generating device, such as an electronic cigarette. Such a device normally comprises a heater connected to a (rechargeable) power source which can be activated either by the user or upon detection of a user's draw through the article 1. In this case the heater is a microwave heater configured to emit microwave radiation to heat the aerosol generating material 3 in the article for heat-not-burn consumption. Typically the microwave heater will heat the aerosol generating material 3 at a temperature in the rage of about 200 to 350 degrees Celsius. The article 1 is normally shaped and sized such that at least a portion of the article 1 is complementary to the heating chamber of the aerosol generating device. In this case, the article 1 is substantially cylindrical in form and as such the heating chamber of the aerosol generating device is also generally cylindrical.

It should be understood that the electronic cigarette is an aerosol generation device which could equally be referred to as a "heated tobacco device", a "heat-not-burn tobacco device", a "device for vaporising tobacco products", and the like, with this being interpreted as a device suitable for achieving these effects. The features disclosed herein are equally applicable to devices which are designed to vaporise any aerosol generating medium.

If a user mistakenly or otherwise attempts to light the distal end of the article 1, in order to consume the article as a traditional smoking article, the ceramic insulation 4 prevents the aerosol generating material 3 at the distal end from combustion. The portion which is covered by the insulation 4 - i.e. the portion between the distal end and the dotted line 4a - cannot be accessed by an open flame and as such the article 1 cannot be consumed by the user as a traditional cigarette.

In addition to the abovementioned feature of preventing ignition, the insulation 4 creates an inner chamber within the article 1 which acts to contain heat energy in the inner volume of the insulation 4. As such, when the aerosol generating material 3 is heated, the heat energy is generally contained within the inner chamber created by the insulation 4 meaning less heat energy is dissipated or wasted to the surroundings. In other examples where the insulation 4 is not cylindrical or where it forms a different shape, the insulation 4 can still provide heat-containing characteristics to improve heat conduction within the article 1 when heated.

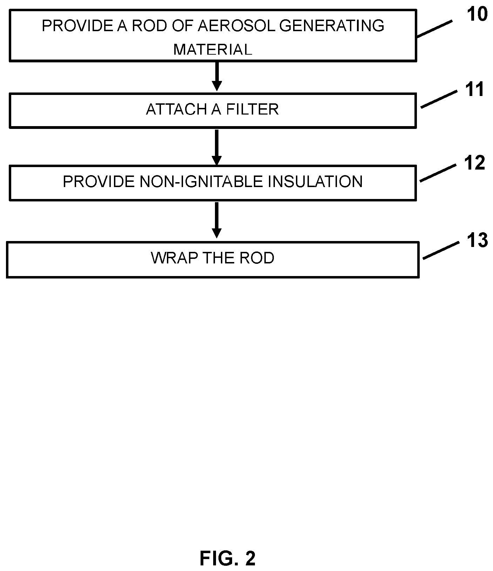

The aerosol generating article 1 described above can be manufactured in an integrated process. The flow diagram of Figure 2 schematically illustrates an example method for manufacturing such an aerosol generating article 1. In a first step 10, aerosol generating material is provided. In this case, a rod of tobacco is provided to be integrated into the article 1. Then, a filter is positioned at one end of the rod. The filter can be affixed to the rod of aerosol generating material by means of a plug wrap in order to attach the filter. The non-ignitable insulation is then provided in the form of a thin ceramic sheet. The rod of aerosol generating material and/or the filter can be placed on to the ceramic sheet, or vice-versa. Then, the rod is wrapped for example by wrapping the ceramic sheet around the rod, and then encasing with a paper wrap, or by overlaying a paper wrap on top of the ceramic sheet and then wrapping the ceramic and paper at the same time over the rod of aerosol generating material. The paper wrap may be provided from a continuous roll of paper wrap positioned on a bobbin and then cut to size to encircle the article 1. Similarly, the ceramic sheet may also be provided as a continuous roll of ceramic sheet which is positioned on a bobbin and then spun out as required to be integrated within the article 1.

## Claims

1. An aerosol generating article (1) comprising:
a rod of aerosol generating material (3) having a first end and a second end opposite to the first end;
a filter (5) attached at the first end of the rod;
a paper wrap (2) wound around the rod so as to provide an outer layer; and
a non-ignitable insulation (4) provided at the second end of the rod, wherein the insulation is arranged to prevent ignition of the aerosol generating material at the second end, and wherein the insulation allows transmission of microwave radiation such that the aerosol generating material at the second end can be heated by an external source of microwave radiation;
**characterised in that** the non-ignitable insulation is a sheet of ceramic material, arranged within the article so as to encircle a portion of the aerosol generating material at the second end of the rod.

2. An aerosol generating article according to claim 1, wherein the sheet of ceramic material has a thickness of between about 0.1 mm to about 0.5 mm.

3. An aerosol generating article according to any of claims 1 and 2, wherein the sheet of ceramic material is wound around the rod so as to encircle the portion of the aerosol generating material at the second end, and wherein the paper wrap is wound around the sheet of ceramic material such that the paper wrap encircles both the aerosol generating material and the insulation at the second end of the rod.

4. An aerosol generating article according to any preceding claim, wherein the insulation extends a distance of between about 0.5 cm to about 1.0 cm along the length of the rod.

5. An aerosol generating article according to any preceding claim wherein the aerosol generating material comprises tobacco, and the paper wrap comprises cigarette paper.

6. An aerosol generating system, comprising:
an aerosol generating device having a heating chamber and a heater arranged to provide heat to the heating chamber,
an aerosol generating article according to any preceding claim, engaged with the device such that at least a portion of the second end of the rod is inserted within the heating chamber,
wherein the heater comprises a source of microwave radiation and is arranged to selectively provide microwave radiation to the article so as to heat the aerosol generating material in the article.

7. An aerosol generating system according to claim 6, wherein the heater is arranged to provide microwave radiation to the full length of the rod of aerosol generating material.

8. A method of providing an aerosol generating article, comprising the steps of:
providing a rod of aerosol generating material;
attaching a filter at a first end of the rod;
providing a non-ignitable insulation at a second end of the rod;
wrapping the rod, insulation and/or the filter with a paper wrap so as to form an outer layer, wherein the insulation is arranged to prevent ignition of the aerosol generating material at the second end, and wherein the insulation allows transmission of microwave radiation such that the aerosol generating material at the second end can be heated by an external source of microwave radiation;
**characterised in that** the step of providing a non-ignitable insulation at a second end of the rod comprises:
wrapping a portion of aerosol generating material at the second end of the rod with a ceramic sheet.

## Patentansprüche

1. Aerosolerzeugungsartikel (1), umfassend:
Einen Stab aus aerosolerzeugendem Material (3), der ein erstes Ende und ein zweites, dem ersten Ende gegenüberliegendes Ende aufweist;
einen Filter (5), der am ersten Ende des Stabes angebracht ist;
eine Papierumhüllung (2), die um den Stab gewickelt ist, um eine äußere Schicht bereitzustellen; und
eine nicht entzündbare Isolierung (4), die am zweiten Ende des Stabes 10 bereitgestellt ist, wobei die Isolierung so angeordnet ist, dass das Zünden des aerosolerzeugenden Materials am zweiten Ende verhindert wird und die Isolierung die Durchlässigkeit von Mikrowellenstrahlung ermöglicht, sodass das aerosolerzeugende Material am zweiten Ende durch eine externe Mikrowellenstrahlungsquelle erhitzt werden kann;
**dadurch gekennzeichnet, dass** die nicht entzündbare Isolierung aus einer Keramikplatte besteht, die innerhalb des Artikels so angeordnet ist, dass sie einen Teil des Aerosol erzeugenden Materials am zweiten Ende des Stabes umschließt.

2. Aerosolerzeugender Artikel nach Anspruch 1, wobei die Keramikplatte eine Dicke zwischen etwa 0,1 mm und etwa 0,5 mm aufweist.

3. Aerosolerzeugender Artikel nach einem der Ansprüche 1 und 2, wobei die Folie aus Keramikmaterial um den Stab gewickelt ist, sodass sie den Teil des aerosolerzeugenden Materials am zweiten Ende umschließt, und wobei die Papierumhüllung um die Folie aus Keramikmaterial gewickelt ist, sodass die Papierumhüllung sowohl das aerosolerzeugende Material als auch die Isolierung am zweiten Ende des Stabes umschließt.

4. Aerosolerzeugender Artikel nach einem vorhergehenden Anspruch, wobei sich die Isolierung über eine Strecke von etwa 0,5 cm bis etwa 1,0 cm entlang der Länge des Stabes erstreckt.

5. Aerosolerzeugender Artikel nach einem vorhergehenden Anspruch, wobei das aerosolerzeugende Material Tabak und die Papierumhüllung Zigarettenpapier umfasst.

6. Aerosolerzeugungssystem, umfassend:
Eine Aerosolerzeugungsvorrichtung mit einer Heizkammer und einem Heizelement, das eingerichtet ist, der Heizkammer Wärme bereitzustellen,
einen aerosolerzeugenden Artikel nach einem vorhergehenden Anspruch, der mit der Vorrichtung so verbunden ist, dass mindestens ein Teil des zweiten Endes des Stabes in die Heizkammer eingeführt ist,
wobei das Heizelement eine Mikrowellenstrahlungsquelle umfasst und so angeordnet ist, dass es dem Artikel selektiv Mikrowellenstrahlung zuführt, um das im Artikel enthaltene aerosolerzeugende Material zu erhitzen.

7. Aerosolerzeugungssystem nach Anspruch 6, wobei das Heizelement so angeordnet ist, dass es Mikrowellenstrahlung über die gesamte Länge des Stabes aus Aerosolerzeugungsmaterial bereitstellt.

8. Verfahren zur Bereitstellung eines aerosolerzeugenden Artikels, das die folgenden Schritte umfasst:
Bereitstellen eines Stabes aus aerosolerzeugendem Material;
Anbringen eines Filters an einem ersten Ende des Stabes;
Bereitstellen einer nicht entzündbaren Isolierung an ein zweites Ende des Stabes;
Umwickeln des Stabes, der Isolierung und/oder des Filters mit einer Papierumhüllung, um eine äußere Schicht zu bilden, wobei die Isolierung so angeordnet ist, dass ein Entzünden des aerosolerzeugenden Materials am zweiten Ende verhindert wird und die Isolierung die Durchlässigkeit von Mikrowellenstrahlung ermöglicht, sodass das aerosolerzeugende Material am zweiten Ende durch eine externe Mikrowellenstrahlungsquelle erhitzt werden kann;
**dadurch gekennzeichnet, dass** der Schritt der Bereitstellung einer nicht entzündbaren Isolierung an ein zweites Ende des Stabes Folgendes umfasst:
Umwickeln eines Teils des aerosolerzeugenden Materials am zweiten Ende des Stabes wird mit einer Keramikfolie.

## Revendications

1. Article de génération d'aérosol (1) comprenant :
une tige de matière de génération d'aérosol (3) avec un premier bout, et un deuxième bout situé face au premier bout ;
un filtre (5) fixé au premier bout de la tige ;
une enveloppe de papier (2) enroulée autour de la tige, de façon à constituer une couche extérieure ; et
une isolant ininflammable (4) agencé au deuxième bout de la tige, l'isolant étant agencé pour empêcher l'allumage de la matière de génération d'aérosol au deuxième bout, et l'isolant permettant la transmission d'un rayonnement de micro-ondes de sorte que la matière de génération d'aérosol au deuxième bout puisse être chauffée par une source externe de rayonnement de micro-ondes ;
**caractérisé en ce que** l'isolant ininflammable est une feuille de matière céramique, agencée au sein de l'article de façon à encercler une partie de la matière de génération d'aérosol au deuxième bout de la tige.

2. Article de génération d'aérosol selon la revendication 1, l'épaisseur de la feuille de matière céramique mesurant d'environ 0,1 mm à environ 0,5 mm.

3. Article de génération d'aérosol selon une quelconque des revendications 1 et 2, la feuille de matière céramique étant enroulée autour de la tige de façon à encercler la partie de la matière de génération d'aérosol au deuxième bout, et l'enveloppe de papier étant enroulée autour de la feuille de matière céramique de sorte que l'enveloppe de papier encercle à la fois la matière de génération d'aérosol et l'isolant au deuxième bout de la tige.

4. Article de génération d'aérosol selon une quelconque des revendications précédentes, l'isolant s'étendant sur une distance comprise entre environ 0,5 cm et environ 1,0 cm le long de la longueur de la tige.

5. Article de génération d'aérosol selon une quelconque des revendications précédentes, la matière de génération d'aérosol comprenant du tabac, et l'enveloppe de papier comprenant du papier à cigarette.

6. Système de génération d'aérosol comprenant :
un dispositif de génération d'aérosol possédant une chambre de chauffe et un dispositif de chauffage agencés pour apporter de la chaleur à la chambre de chauffe ;
un article de génération d'aérosol selon une quelconque des revendications précédentes, engagé avec le dispositif de sorte qu'au moins une partie du deuxième bout de la tige soit insérée dans la chambre de chauffe ;
le dispositif de chauffage comprenant une source de rayonnement de micro-ondes, et étant agencé pour apporter de façon sélective un rayonnement de micro-ondes à l'article afin de chauffer la matière de génération d'aérosol dans l'article.

7. Système de génération d'aérosol selon la revendication 6, le dispositif de chauffage étant agencé pour apporter un rayonnement de micro-ondes à la longueur intégrale de la tige de matière de génération d'aérosol.

8. Procédé de réalisation d'un article de génération d'aérosol, comprenant les étapes suivantes :
agencement d'une tige de matière de génération d'aérosol ;
fixation d'un filtre à un premier bout de la tige ;
agencement d'un isolant ininflammable à un deuxième bout de la tige ;
enveloppement de la tige, de l'isolant et/ou du filtre avec une enveloppe en papier de façon à former une couche extérieure, l'isolant étant agencé pour empêcher l'allumage de la matière de génération d'aérosol au deuxième bout, et l'isolant permettant la transmission d'un rayonnement de micro-ondes de sorte que la matière de génération d'aérosol au deuxième bout puisse être chauffée par une source externe de rayonnement de micro-ondes ;
**caractérisé en ce que** l'étape d'agencement d'un isolant ininflammable à un deuxième bout de la tige comprenne :
l'enveloppement d'une partie de la matière de génération d'aérosol au deuxième bout de la tige avec une feuille de céramique.
